# EUROPÄISCHE PATENTSCHRIFT

(11) **EP 1 506 704 B1**
(45) Veröffentlichungstag und Bekanntmachung des Hinweises auf die Patenterteilung: **23.07.2008**
(21) Anmeldenummer: 04103867.0
(22) Anmeldetag: 11.08.2004
(51) Int. Cl.: A01D 75/18, F16C 19/52, F16C 17/24, F16C 13/02, G01M 13/04

(54) **Lagerzusammenbau und Ballenpresse**
Bearing assembly and baling press
Assemblage de palier et presse à balles

(30) Priorität: 14.08.2003 US 641148
(43) Veröffentlichungstag der Anmeldung: 16.02.2005
(73) Patentinhaber: DEERE & COMPANY, Moline, Illinois 61265-8098 (US)
(72) Erfinder: Derscheid, Daniel Eric, 52501, Ottumwa (US); Anstey, Henry D., Ottumwa, IA Iowa 52501 (US)
(74) Vertreter: Magin, Ludwig Bernhard

(56) Entgegenhaltungen:
- DE-C- 336 660
- DE-U- 20 202 536
- US-A- 3 897 116
- PATENT ABSTRACTS OF JAPAN Bd. 0182, Nr. 27 (M-1597), 25. April 1994 (1994-04-25) & JP 06 017827 A (KOYO SEIKO CO LTD; others: 01), 25. Januar 1994 (1994-01-25)
- PATENT ABSTRACTS OF JAPAN Bd. 0111, Nr. 60 (M-592), 23. Mai 1987 (1987-05-23) & JP 61 294215 A (ASAHI CHEM IND CO LTD), 25. Dezember 1986 (1986-12-25)

## Beschreibung

Die Erfindung betrifft einen Lagerzusammenbau mit einem Lager, welches einen ersten Lagerring und einen zweiten Lagerring aufweist, welche relativ zueinander, konzentrisch um eine Drehachse rotieren können, mit einem ersten Lagerelement, welches wirksam mit einem der Lagerringe verbunden ist und wenigstens eine erste Kontaktfläche aufweist, welche von der Drehachse beabstandet ist, und mit einem zweiten Lagerelement, welches wirksam mit dem zweiten Lagerring verbunden ist und wenigstens eine zweite, wenn das Lager keinem Verschleiß unterworfen ist, von der ersten Kontaktfläche beabstandete Kontaktfläche aufweist, wobei die Kontaktflächen, wenn das Lager vorzugsweise in der Art verschlissen ist, dass wenigstens eines der Lagerelemente nicht mehr rund läuft, einander derart berühren, dass sie ein hörbares Geräusch erzeugen Die Erfindung betrifft darüber hinaus eine Ballenpresse.

Es ist bekannt, Sensoren zu verwenden, um zu ermitteln, wenn eine durch ein Lager gestützte Welle aufgrund von Verschleiß nicht länger zentrisch rotiert und daher in Kontakt mit einer Oberfläche kommt. Derartige Sensoren liefern ein elektrisches Signal, welches mit diesem Kontakt korrespondiert. Ein Beispiel einer derartigen Anordnung zeigt die US-A-5,224,835. Auch die US-B-6,314,788, US-B-6,271,761 und US-B-6,237,877 zeigen eine Anordnung zur Ermittlung von Lagerverschleiß oder -versagen.

Die US-B-6,206,573 zeigt eine Einrichtung zur Ermittlung des Lagerverschleißes. Hierzu weist ein Lager ein erstes und ein zweites Lagerelement auf, welche relativ zueinander rotieren können. Eines der Lagerelemente weist eine Kontaktfläche auf, in welche Bereiche größerer Härte eingebettet sind, die ab einem gewissen Verschleißzustand der Kontaktfläche aus dem übrigen Material hervortreten und in rotierendem Kontakt mit dem zweiten Lagerelement Vibrationen erzeugen.

Die DE-C2-42 38 264 zeigt einen Lagerzusammenbau, der ein festes Halteteil, ein von diesem gehaltenes Lager und eine in dem Lager drehbar gelagerte Welle aufweist. Eine Vorrichtung zur Fehlererfassung des Lagers enthält einen ersten mit der Welle verbundenen und mit dieser rotierenden Teil, einen mit dem festen Halteteil nahe dem ersten Teil verbundenen zweiten Teil mit einem ausgesparten Endbereich, der einen Umfangsbereich des ersten Teiles beabstandet aufnimmt und Mittel zum Erfassen eines Bruches des ausgesparten Endbereichs.

Die gattungsgemäße DE-C-336 660 zeigt eine Anordnung zum Abstellen einer Maschine und zum Alarm im Falle einer unzulässigen Lagerabnutzung, wobei ein elektrischer Stromkreis durch die im Lager unzentrisch gewordene Welle geschlossen wird und dadurch die Maschine abgestellt oder ein Signal gegeben wird.

Das der Erfindung zugrunde liegende Problem wird darin gesehen, dass derartige Einrichtungen aufwändig und teuer sind bzw. aufgrund ihrer Störungsanfälligkeit nicht für einen Einsatz an landwirtschaftlichen Erntemaschinen, wie Ballenpressen geeignet sind.

Dieses Problem wird erfindungsgemäß durch die Lehre der Patentansprüche 1 bzw. 7 gelöst, wobei in den weiteren Patentansprüchen die Lösung in vorteilhafter Weise weiterentwickelnde Merkmale aufgeführt sind.

Es wird ein Lagerzusammenbau mit einem Lager gezeigt, welches einen ersten Lagerring und einen zweiten Lagerring aufweist, welche relativ zueinander, konzentrisch um eine Drehachse rotieren können, mit einem ersten Lagerelement, welches wirksam mit einem der Lagerringe verbunden ist und wenigstens eine erste Kontaktfläche aufweist, welche einen bestimmten Abstand zu der Drehachse aufweist, und mit einem zweiten Lagerelement, welches wirksam mit dem zweiten Lagerring verbunden ist und wenigstens eine zweite, wenn das Lager keinem Verschleiß unterworfen ist, von der ersten Kontaktfläche beabstandete Kontaktfläche aufweist. Die Kontaktflächen berühren einander, wenn das Lager vorzugsweise in der Art verschlissen ist, dass wenigstens eines der Lagerelemente nicht mehr rund läuft, derart, dass sie ein hörbares Geräusch erzeugen.

Auf diese Weise wird ein Lagerzusammenbau zur Verfügung gestellt, welcher einer Bedienungsperson Informationen in der Art eines hörbaren Geräusches liefert, wenn das Lager in einem derartigen Maße verschlissen ist, dass mit einem baldigen Lagerversagen zu rechnen ist und/oder wenn das Lager ausgetauscht werde sollte, um einem möglichen Lagerversagen vorzubeugen. Hierzu sind mit einem äußeren bzw. einem inneren Lagerring Lagerelemente verbunden, welche Kontaktflächen aufweisen, welche in einem normalen Betrieb bzw. wenn das Lager nicht oder nur in einem geringen bzw. tolerierbaren Maße verschlissen ist, voneinander beabstandet sind, so dass sie sich nicht berühren. Mit fortschreitendem Verschleiß näheren sich die Kontaktflächen aufgrund einer Verschlechterung des Rundlaufs des Lagers bzw. der Lagerringe und somit der Lagerelemente mit Bezug aufeinander aneinander an, so dass sie sich berühren. Durch diese Berührung wird ein Geräusch erzeugt, welches für eine Bedienungsperson hörbar bzw. zumindest wahrnehmbar ist. Einer der Lagerringe ist mit einem Trägerelement, vorzugsweise in der Art einer Welle oder Achse, zumindest im Wesentlichen rotationsfest verbunden sein. Ist dieses Trägerelement wiederum mit einem eine Antriebsquelle aufweisenden Antrieb verbunden und ist zwischen der Antriebsquelle und dem Trägerelement eine Überlastkupplung, vorzugsweise in der Art einer Rutschkupplung vorgesehen, so kann diese während eines normalen Betriebs bzw. wenn das Lager nicht oder nur in geringem Maße verschlissen ist, eine Antriebsverbindung zwischen der Antriebsquelle und dem Trägerelement herstellen. Ist das Lager aber verschlissen und berühren sich die Kontaktflächen, so erzeugen diese ein Moment, auf welches die Überlast- bzw. Rutschkupplung ansprechen kann, um die Antriebsverbindung zu trennen.

Die Kontaktflächen können beispielsweise durch Flächen, insbesondere Innen- oder Außenflächen, der Lagerelemente gebildet werden. Ist aber wenigstens eine der Kontaktflächen auf einem Vorsprung vorgesehen, welcher sich von dem jeweiligen Lagerelement weg erstreckt, so berührt diese Kontaktfläche bei einem unrund laufenden Lagerelement die andere Kontaktfläche nicht dauerhaft und kann so ein auffälligeres Signal, beispielsweise in der Art eines Klickens oder Klopfens und/oder in der Art von Vibrationen erzeugen. Es können auch mehrere Vorsprünge vorgesehen sein, welche jeweils eine erste Kontaktfläche bzw. erste Kontaktflächen aufweisen, die mit der zweiten Kontaktfläche oder mit ebenfalls auf Vorsprüngen angeordneten zweiten Kontaktflächen zusammenwirken können.

Ist wenigstens eine der Kontaktflächen bezogen auf die Drehachse kreisbogenförmig ausgebildet, so kann einem Verhaken und/oder einem sofortigen Blockieren entgegengewirkt werden, wenn die Kontaktflächen aufeinander treffen. Die Kontaktflächen können zumindest in begrenztem Maße aneinander vorbeigleiten und erzeugen so ein ansteigendes Geräusch bzw. einen allmählichen Anstieg des auftretenden Moments. Dies ist insbesondere der Fall, wenn sowohl die erste(n) als auch die zweite(n) Kontaktfläche(n) auf Vorsprüngen angeordnet sind.

Gemäß einer ersten Ausführungsform der Erfindung kann eines der Lagerelemente als ein Lagergehäuse ausgebildet sein bzw. ein solches aufweisen. Das Lagergehäuse wiederum weist eine der Drehachse zugewandte Fläche auf, von der sich ein eine Kontaktfläche tragender Vorsprung nach innen erstreckt. Die Kontaktfläche ist vorzugsweise in einem Kopfbereich bzw. einem nach innen gewandten Bereich/Abschnitt des Vorsprungs vorgesehen. Das zweite Lagerelement weist eine Scheibe auf oder ist als eine solche ausgebildet, von der sich ein die zweite Kontaktfläche tragender Vorsprung nach außen erstreckt. Zwischen den Vorsprüngen bzw. den Kontaktflächen besteht ein Spalt bzw. eine Lücke, solange das Lager nicht oder nur geringfügig verschlissen ist, welche(r) sich mit zunehmendem Verschleiß des Lagers bzw. fortschreitendem Ausschlagen bzw. Unrundlaufen des Lagers zumindest abschnittsweise und/oder zeitweilig verringert.

Gemäß einer weiteren Ausführungsform weist eines der Lagerelemente ein zylindrisches Rohr mit einer eine der Kontaktflächen bildende bzw. bestimmende Innenfläche auf. Das zweite Lagerelement weist eine Scheibe auf bzw. ist in der Art einer Scheibe oder auch einer Hülse o.ä. mit wenigstens einem Vorsprung ausgebildet, der eine zweite oder die zweite Kontaktfläche bildet bzw. aufweist, welche mit der ersten Kontaktfläche zusammenwirkt. Die Scheibe kann beispielsweise derart ausgebildet sein, dass sie bei Berührung der Innenfläche des zylindrischen Rohres bzw. bei einem Entlanggleiten ein quietschendes Geräusch hervorruft.

Der Lagerzusammenbau kann auch ein zweites Lager aufweisen, welches durch eine auf dem Trägerelement angeordnete zylindrische Lagerbüchse gebildet wird. Dieses zweite Lager oder auch Hilfslager weist einen äußeren Umfangsbereich auf, welcher an einer der Kontaktflächen entlang gleiten kann. Der Umfangsbereich kann, wenn das Lager nicht verschlissen ist, einen Spalt bzw. Abstand zwischen den Kontaktflächen aufrecht erhalten und mit fortschreitender Lebensdauer und Verschleiß des Lagers derart selbst verschlissen werden, dass der Umfangsbereich fortschreitend abgetragen wird, so dass die Kontaktflächen einander berühren können. Hierzu ist die Lagerbüchse bzw. insbesondere ihr Umfangsbereich aus einem Kunststoffmaterial gefertigt. Auf diese Weise kann die Lebensdauer des Lagerzusammenbau und die Zeit zwischen einem Austauschen der Lager durch eine Bedienungsperson erhöht werden.

Ein erfindungsgemäßer Lagerzusammenbau kann an unterschiedlichen Einrichtungen und Maschinen eingesetzt werden. Insbesondere eignet er sich aber zum Einsatz an landwirtschaftlichen Maschinen und insbesondere an landwirtschaftlichen Erntemaschinen, wie Ballenpressen, da er einfach und robust ist und auch unter rauhen Einsatzbedingungen eine Bedienungsperson über einen bevorstehenden Lagerschaden bzw. eine Notwendigkeit eines Lagerwechsels informieren kann.

Bei der Ballenpresse kann es sich beispielsweise um eine Ballenpresse zur Herstellung quaderförmiger Ballen, insbesondere aber um eine Rundballenpresse handeln.

Der Lagerzusammenbau kann insbesondere dazu dienen, um Ballen fördernde Walzen bzw. Rohre zu lagern, anzutreiben und/oder mit solchen zusammenwirken, welche einen oder mehrere ballenbildende Riemen tragen. Derartige Riemen sind um die Rohre geschlungen und bilden einen insbesondere variablen Pressraum in dem der Ballen unter Zufuhr von Erntegut gebildet und gepresst wird.

Ein solches Rohr bzw. eine derartige Walze wird vorzugsweise mittels zweier derartiger Lagerzusammenbauten an der Ballenpresse bzw. an den Seitenwänden der Ballenpresse gelagert bzw. angebracht.

In der Zeichnung sind zwei nachfolgend näher beschriebene Ausführungsbeispiele der Erfindung dargestellt. Es zeigt:
- Fig. 1: eine Ansicht eines Lagerzusammenbaus mit einem zylinderförmigen Rohr, welches auf einem sechskantförmigen Trägerelement gelagert ist,
- Fig. 2: einen Ausschnitt entlang der Linie 2-2 aus Figur 1,
- Fig. 3: eine schematische Darstellung eines mit einem Lagerzusammenbau nach Figur 1 zusammenwirkenden Antriebs,
- Fig. 4: eine Ansicht einer zweiten Ausführungsform der Erfindung und
- Fig. 5: einen Schnittdarstellung entlang der Linie 5-5 aus Figur 4.

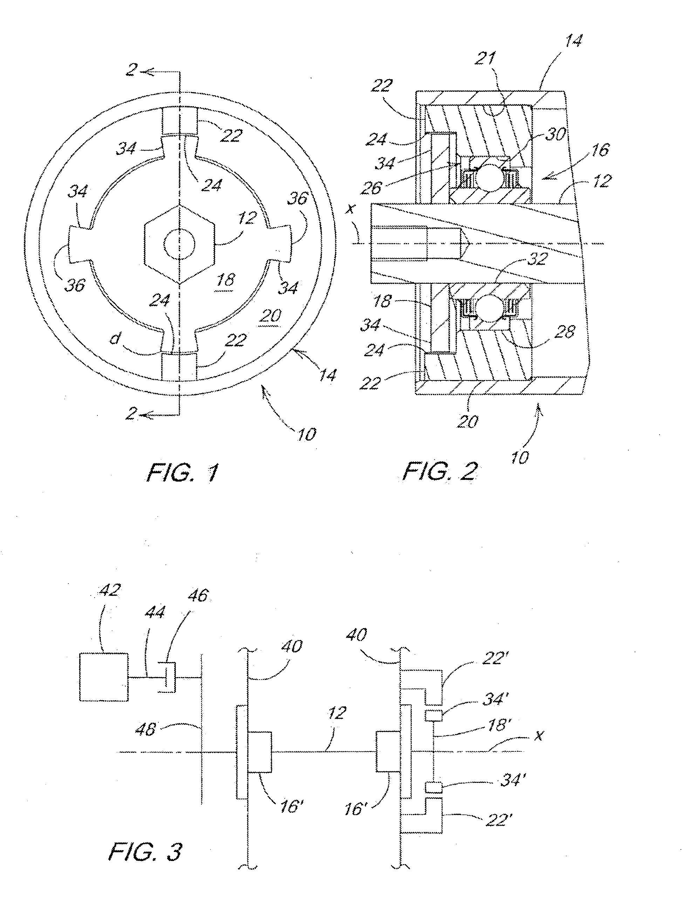

Es wird auf die Figuren 1 und 2 Bezug genommen, in denen ein Lagerzusammenbau 10 mit einem Trägerelement 12 in der Art einer Achse, welches sich entlang einer Rotationsachse bzw. einer Achse X erstreckt, ein Rolle, Walze bzw. ein zylinderförmiges Rohr 14, welches konzentrisch auf dem Trägerelement 12 angeordnet ist, eine Lagereinheit 16, welche das Rohr 14 auf dem Trägerelement 12 lagert, und eine gezahnte Scheibe bzw. ein Lagerelement 18 gezeigt, das auf dem Trägerelement 12 angrenzend an die Lagereinheit 16 gelagert ist.

Das Trägerelement 12 ist sechskantförmig und würde so fest angebracht, dass seine Rotation um die Achse X verhindert würde. Ein Beispiel für eine derartige Anordnung bilden die Freilaufrollen bzw. -walzen einer großen Rundballenpresse, bei der die Endbereiche des Trägerelements an gegenüberliegenden Seitenwänden einer Presskammer angebracht sind und wobei die Freilaufrollen in Form eines zylindrischen Rohrs durch ballenformende Riemen ergriffen und angetrieben wird. Die Anordnung würde aber auch für andere Einsatzgebiete passen, in denen die Lagereinheit 16 verwendet wird, um das Trägerelement 12, so dass es rotieren kann, an einem feststehenden Körper zu befestigen. Ein Beispiel für eine Anordnung dieser Art stellen einen ballenformenden Riemen einer großen Rundballenpresse antreibende Rollen bzw. Walzen dar, bei denen das Trägerelement in der Art einer Welle ausgebildet ist, und sich an gegenüberliegende Seitenwänden einer Presskammer durch einen Lagerzusammenbau abstützt.

Die Lagereinheit 16 weist ein zylindrisches Lagergehäuse bzw. ein weiteres Lagerelement 20 auf, das in einem jeweiligen Endbereich (von denen nur ein Endbereich gezeigt wird) des Rohrs 14 angeordnet und an einer Innenfläche 21 desselben befestigt ist. Mit einer axial außen angeordneten Fläche des Lagerelements 20 ist ein Paar von diametral gegenüberliegenden, axial abstehender Vorsprünge 22 verbunden. Jeder Vorsprung 22 weist eine gebogene innere Kontaktfläche 24 auf, welche konzentrisch um die Rotationsachse X verläuft.

Die Lagereinheit 16 weist darüber hinaus ein Wälz- bzw. Rollenlager bzw. ein Lager 26 mit einem äußeren Lagerring 28, der in eine abgestufte Bohrung 30 des zweiten Lagerelements 20 eingepresst ist, und einen inneren Lagerring 32 mit einer zentralen Öffnung auf, die passend zu dem sechseckigen Querschnitt des Trägerelements 12 ausgebildet ist und auf dieser aufgenommen wird, so dass der innere Lagerring 32 gegen eine Drehung gesichert ist.

Das erste Lagerelement 18 ist auf dem Trägerelement 12 angrenzend an das Lager 26 und zu den Vorsprüngen 22 radial fluchtend angebracht. Das erste Lagerelement 18 ist mit vier gleichwinklig beabstandeten Vorsprüngen 34 versehen, welche jeweils eine radial äußere Kontaktfläche 36 aufweisen, welche konzentrisch um die Achse X auf einem Radius angeordnet ist, der die Kontaktfläche 36 in einem vorbestimmten Abstand von der Kontaktfläche 24 eines vorgegebenen Vorsprungs 22 hält, wenn der Vorsprung 34 und der Vorsprung 22 radial aneinander angrenzen und das Lager 26 in einem unbenutzten/nicht verschlissenem Zustand ist.

Im Betrieb bewirkt ein Verschleiß der Rollenelemente und der entsprechenden zugehörigen Oberflächen des äußeren und des inneren Lagerrings 28 und 32 des Lagers 26, dass die Drehung des Rohres 14 nicht länger konzentrisch um die Achse X erfolgt. Bei einer vorgegebenen Menge an Verschleiß werden sich die Kontaktflächen 24 und 36 berühren und ein klickendes oder klopfendes Geräusch verursachen, das eine Bedienungsperson vor einem bevorstehenden Lagerversagen warnen wird.

Es wird nun auch auf Figur 3 Bezug genommen, in der eine Anordnung dargestellt wird, in der das Trägerelement 12 entlang einer Rotationsachse X angeordnet ist und durch ein Paar beabstandeter Lagereinheiten 16', die in entsprechenden Seitenwänden 40 befestigt sind, drehbar gelagert werden. Eine Antriebsquelle, welche schematisch bei 42 gezeigt wird, ist mit einer eine Rutschkupplung 46 aufweisenden Antriebswelle 44 verbunden, die in einem Endbereich (nicht sichtbar) ein Kettenzahnrad aufweist, das über eine Antriebskette 48 mit einem Kettenzahnrad (nicht sichtbar), das in einem Endbereich des Trägerelements 12 angebracht ist, verbunden ist. An dem Trägerelement 12 ist eine gezahnte Scheibe bzw. ein Lagerelement 18 angrenzend an eine der Lagereinheiten 16' angebracht und weist Vorsprünge 34' auf, die in einem gleichbleibenden Radius von der Achse X angeordnet sind. An der Wand 40 sind Vorsprünge 22' ebenfalls mit einem konstanten Radius an der Achse X vorgesehen. So lange die Lager 26 und zugeordnete Anordnungen der Lagereinheiten 16 sich in einem verhältnismäßig unverbrauchten Zustand befinden, besteht zwischen den Vorsprüngen 34' und den Vorsprüngen 22' ein vorbestimmter Abstand bzw. Spalt. Nach einer gewissen Menge an Lagerabnutzung wird das Trägerelement 12 mit Bezug auf die Drehachse X mit einem Betrag in einer Weise nicht länger zentrisch rotieren, welcher die Lücke bzw. den Abstand zwischen den Vorsprünge 34' und den Vorsprüngen 22' übersteigt, wodurch die Vorsprünge 34' mit den Vorsprüngen 22' in Kontakt treten. Wenn ein verhältnismäßig großer Verlust an radialem Abstand zwischen den Vorsprüngen 34' und den Vorsprüngen 22' auftritt, wird sich der Drehwiderstand in einem solchen Maße erhöhen, dass die Rutschkupplung 46 durchrutschen wird, um so die Trägerelemente 12 von der Antriebsquelle 42 zu trennen. Die Bedienungsperson wird dann wissen, dass sie die verschlissenen Lager auswechseln sollte.

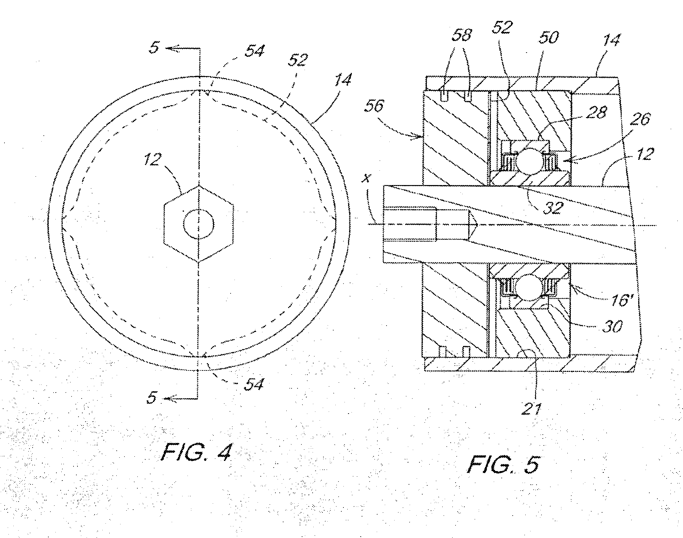

Es wird nun auf die Figuren 4 und 5 Bezug genommen, in denen eine zweite Ausführungsform der Erfindung gezeigt wird, wobei für Bauteile, entsprechend den zuvor mit Bezug auf die Ausführungsform gemäß den Figuren 1 und 2 beschriebenen, die gleichen Bezugszeichen vergeben werden.

Folglich trägt das feststehende Trägerelement 12 in jedem Endbereich ein zylindrisches Rohr 14 mittels einer Lagereinheit 16', welche ein zylindrisches Lagergehäuse 50 aufweist, welches in einem Endbereich des Rohres 14 befestigt ist und das Wälz- bzw. Rollenlager bzw. das Lager 26 aufnimmt.

An dem Trägerelement 12 ist angrenzend an das Lager 26 eine verhältnismäßig dünne, quietschende Platte oder Scheibe bzw. ein Lagerelement 52 angeordnet, welches eine Mehrzahl von Vorsprüngen 54 (siehe Figur 4) aufweist, welche an gleichmäßig beabstandeten Orten entlang der Peripherie des Lagerelements 52 angeordnet sind. Die radial außenliegenden Endbereiche der Vorsprünge 54 weisen normalerweise einen vorgewählten, radialen Abstand von der Innenfläche bzw. der Kontaktfläche 21 des zylindrischen Rohres 14 auf. Wenn das Lager 26 in einem Maße verschlissen ist, dass das Rohr 14 nicht länger zentrisch um die Achse X rotiert, werden die Vorsprünge 54 bzw. Kontaktflächen der Vorsprünge 54 die Innenfläche bzw. die Kontaktfläche 21 des Rohres 14 berühren und eine quietschendes Geräusch verursachen, so dass die Bedienungsperson auf die Tatsache aufmerksam wird, dass die Lager ausgetauscht werden müssen.

Die Zeit zwischen einem Versagen der Lager 26 und dem Zeitpunkt zu dem die Vorsprünge 54 des Lagerelements 52 mit dem Rohr 14 in Kontakt treten, kann verlängert werden, in dem eine Lagerbüchse 56 zur Lagerung der Rolle 14 um das Trägerelement 12 vorgesehen wird. Im Besonderen kann mit Bezug auf Figur 5 gesehen werden, dass die Lagerbüchse 56 auf dem Trägerelement 12 angrenzend an das Lagerelement 52 vorgesehen ist. Die Lagerbüchse 56 weist ein zylindrisches Element aus einem Kunststoffmaterial mit einem niedrigen Reibwert mit ringförmigen Vertiefungen 58 an axial beabstandeten Orten auf seinem Umfang auf. Folglich wird es deutlich, dass die Lagerbüchse 56 eine Lagerung mit einer geringen Reibung für das zylindrische Rohr 14 zur Verfügung stellt, wenn das Lager 26 beginnt zu verschleißen, so dass die Bedienungsperson das Lager 26 nicht wird austauschen müssen, bevor nicht der radiale Umfang der Lagerbüchse 56 derart ausreichend verschlissen ist, dass es den Vorsprüngen 54 des Lagerelements möglich ist, die Kontaktfläche 21 des Rohres 14 zu berühren. Zu diesem Zeitpunkt wird die Lagerbüchse 56 ebenfalls ersetzt werden.

Nachdem die bevorzugte Ausführungsform beschrieben wurde, wird deutlich geworden sein, dass verschiedenen Veränderungen durchgeführt werden können, ohne den Geist der Erfindung, wie er durch die beigefügten Ansprüche bestimmt wird, zu verlassen.

## Patentansprüche

1. Lagerzusammenbau (10) mit einem Lager (26), welches einen ersten Lagerring (28, 32) und einen zweiten Lagerring (28, 32) aufweist, welche relativ zueinander, konzentrisch um eine Drehachse (X) rotieren können, mit einem ersten Lagerelement (18, 20, 52), welches wirksam mit einem der Lagerringe (28, 32) verbunden ist und wenigstens eine erste Kontaktfläche (21, 24, 36) aufweist, welche von der Drehachse (X) beabstandet ist, und mit einem zweiten Lagerelement (18, 20, 52), welches wirksam mit dem zweiten Lagerring (28, 32) verbunden ist und wenigstens eine zweite, wenn das Lager (16) keinem Verschleiß unterworfen ist, von der ersten Kontaktfläche (21, 24, 36) beabstandete Kontaktfläche (24, 36) aufweist, wobei die Kontaktflächen (24, 36), wenn das Lager (26) vorzugsweise in der Art verschlissen ist, dass wenigstens eines der Lagerelemente (18, 20, 52) nicht mehr rund läuft, einander derart berühren, dass sie ein hörbares Geräusch erzeugen, **dadurch gekennzeichnet, dass** einer der Lagerringe (32) mit einem Trägerelement (12), vorzugsweise in der Art einer Welle oder Achse, zumindest im Wesentlichen rotationsfest verbunden ist, welches mit einem eine Antriebsquelle (42) aufweisenden Antrieb verbunden ist, wobei zwischen der Antriebsquelle (42) und dem Trägerelement (12) eine Überlastkupplung, vorzugsweise in der Art einer Rutschkupplung (46), vorgesehen ist, welche normalerweise eine Antriebsverbindung zwischen der Antriebsquelle (42) und dem Trägerelement (12) herstellt, aber zumindest auf ein aufgrund einer Berührung der Kontaktflächen (24, 36) auftretendes Moment ansprechen kann.

2. Lagerzusammenbau nach Anspruch 1, **dadurch gekennzeichnet, dass** wenigstens eine der Kontaktflächen (21, 24, 36) an einem Vorsprung (22, 34) vorgesehen ist, welcher sich von dem jeweiligen Lagerelement (18, 20, 52) weg erstreckt.

3. Lagerzusammenbau nach einem der Ansprüche 1 oder 2, **dadurch gekennzeichnet, dass** die Kontaktfläche bzw. die Kontaktflächen (21, 24, 36) bezogen auf die Drehachse (X) zumindest im Wesentlichen kreisbogenförmig ausgebildet ist/sind.

4. Lagerzusammenbau nach einem oder mehreren der vorherigen Ansprüche **dadurch gekennzeichnet, dass** eines der Lagerelemente (18) ein Lagergehäuse mit einer der Drehachse (X) zugewandten Fläche, von der sich zumindest ein eine Kontaktfläche (24) tragender Vorsprung (22) nach innen erstreckt, und das zweite Lagerelement (20) eine Scheibe von der sich wenigstens ein eine weitere Kontaktfläche (36) aufweisenden Vorsprung (34) nach außen erstreckt, aufweist bzw. derart ausgebildet ist.

5. Lagerzusammenbau nach einem oder mehreren der Ansprüche 1 bis 3, **dadurch gekennzeichnet, dass** eines der Lagerelemente ein zylindrisches Rohr (14) mit einer eine der Kontaktflächen (21) bestimmende Innenfläche und das zweite Lagerelement (52) eine Scheibe mit wenigstens einem eine/die zweite Kontaktfläche aufweisenden Vorsprung (54) aufweist bzw. derart ausgebildet ist.

6. Lagerzusammenbau nach einem oder mehreren der vorherigen Ansprüche, **gekennzeichnet durch** ein zweites Lager, welches eine auf dem Trägerelement (12) angeordnete, zylindrische Lagerbüchse (56), mit einem äußeren, vorzugsweise aus einem Kunststoffmaterial bestehenden Umfangsbereich, der an einer der Kontaktflächen (21) entlang gleiten kann, aufweist, der radial in einem bestimmten Maße abgetragen werden bzw. verschlissen sein muss, damit die Kontaktflächen (21, 54) einander berühren können.

7. Ballenpresse, insbesondere Rundballenpresse, mit wenigstens einem Lagerzusammenbau (10) nach einem oder mehreren der vorherigen Ansprüche.

8. Ballenpresse nach Anspruch 7, **dadurch gekennzeichnet, dass** der Lagerzusammenbau (10) ein wenigstens einen ballenbildenden Riemen tragendes Rohr (14) lagert und/oder antreibt und/oder mit einem solchen zusammenwirkt.

9. Ballenpresse nach Anspruch 8, **dadurch gekennzeichnet, dass** das Rohr (14) mittels wenigstens zweier Lagerzusammenbauten (10) an der Ballenpresse bzw. an Seitenwänden der Ballenpresse gelagert ist.

## Claims

1. Bearing assembly (10) having a bearing (26) which has a first bearing ring (28, 32) and a second bearing ring (28, 32), which bearing rings (28, 32) can rotate relative to one another concentrically about a rotational axis (X), having a first bearing element (18, 20, 52) which is operatively connected to one of the bearing rings (28, 32) and which has at least one first contact surface (21, 24, 36) which is spaced apart from the rotational axis (X), and having a second bearing element (18, 20, 52) which is operatively connected to the second bearing ring (28, 32) and which has at least one second contact surface (24, 36) which is spaced apart from the first contact surface (21, 24, 36) when the bearing (16) is not subjected to any wear, with the contact surfaces (24, 36) coming into contact with one another, if the bearing (26) is preferably worn such that at least one of the bearing elements (18, 20, 52) no longer runs concentrically, in such a way as to generate an audible noise, **characterized in that** one of the bearing rings (32) is at least substantially rotationally fixedly connected to a support element (12), preferably in the form of a shaft or axle, which is connected to a drive which has a drive source (42), with an overload clutch, preferably in the form of a slipping clutch (46), being provided between the drive source (42) and the support element (12), which overload clutch normally produces a drive connection between the drive source (42) and the support element (12) but can respond at least to a torque which occurs on account of contact of the contact surfaces (24, 36).

2. Bearing assembly according to Claim 1, **characterized in that** at least one of the contact surfaces (21, 24, 36) is provided on a projection (22, 34) which extends away from the respective bearing element (18, 20, 52).

3. Bearing assembly according to one of Claims 1 or 2, **characterized in that** the contact surface or the contact surfaces (21, 24, 36) is/are at least substantially in the shape of a circular arc with respect to the rotational axis (X).

4. Bearing assembly according to one or more of the preceding claims, **characterized in that** one of the bearing elements (18) has or is formed in the manner of a bearing housing with a surface which faces towards the rotational axis (X) and from which at least one projection (22), which supports a contact surface (24), extends inwards, and the second bearing element (20) has or is formed in the manner of a disc from which at least one projection (34), which has a further contact surface (36), extends outwards.

5. Bearing assembly according to one or more of Claims 1 to 3, **characterized in that** one of the bearing elements has or is formed in the manner of a cylindrical tube (14) with an inner surface which defines one of the contact surfaces (21), and the second bearing element (52) has or is formed in the manner of a disc with at least one projection (54) which has a/the second contact surface.

6. Bearing assembly according to one or more of the preceding claims, **characterized by** a second bearing which has a cylindrical bearing sleeve (56) which is arranged on the support element (12) and which has an outer peripheral region which is preferably composed of a plastic material and which can slide along on one of the contact surfaces (21), which cylindrical bearing sleeve (56) must be abraded or worn to a certain degree radially in order that the contact surfaces (21, 54) can make contact with one another.

7. Baling press, in particular round baler, having at least one bearing assembly (10) according to one or more of the preceding claims.

8. Baling press according to Claim 7, **characterized in that** the bearing assembly (10) serves to mount and/or drives and/or interacts with a tube (14) which supports at least one bale-forming belt.

9. Baling press according to Claim 8, **characterized in that** the tube (14) is mounted on the baling press or on side walls of the baling press by means of at least two bearing assemblies (10).

## Revendications

1. Assemblage de palier (10), comprenant un palier (26) qui présente une première bague de roulement (28, 32) et une deuxième bague de roulement (28, 32) qui peuvent tourner l'une par rapport à l'autre, de façon concentrique autour d'un axe de rotation (X), un premier élément de palier (18, 20, 52) qui est relié de façon opérationnelle à l'une des bagues de roulement (28, 32) et présente au moins une première surface de contact (21, 24, 36) qui est espacée de l'axe de rotation (X), et un deuxième élément de palier (18, 20, 52) qui est relié de façon opérationnelle à la deuxième bague de roulement (28, 32) et présente au moins une deuxième surface de contact (24, 36) espacée de la première surface de contact (21, 24, 36) lorsque le palier (16) ne subit aucune usure, dans lequel les surfaces de contact (24, 36), lorsque le palier (26) est de préférence usé de telle sorte qu'au moins l'un des éléments de palier (18, 20, 52) ne tourne plus rond, se touchent de telle sorte qu'elles produisent un bruit audible, **caractérisé en ce que** l'une des bagues de roulement (32) est reliée à un élément de support (12), de préférence à la manière d'un arbre ou d'un axe, de façon au moins substantiellement verrouillée en rotation, l'élément étant relié à un système d'entraînement présentant une source d'entraînement (42), dans lequel un accouplement de surcharge, de préférence à la manière d'un accouplement à glissement (46), est prévu entre la source d'entraînement (42) et l'élément de support (12), l'accouplement établissant normalement un raccordement d'entraînement entre la source d'entraînement (42) et l'élément de support (12), mais peut du moins réagir à un couple apparaissant en raison d'un contact entre les surfaces de contact (24, 36).

2. Assemblage de palier selon la revendication 1, **caractérisé en ce qu'**au moins l'une des surfaces de contact (21, 24, 36) est prévue sur une saillie (22, 34) qui s'étend en s'éloignant de l'élément de palier respectif (18, 20, 52).

3. Assemblage de palier selon l'une quelconque des revendications 1 ou 2, **caractérisé en ce que** la surface de contact ou les surfaces de contact (21, 24, 36), par rapport à l'axe de rotation (X), est/sont réalisée(s) au moins substantiellement en forme d'arc.

4. Assemblage de palier selon l'une quelconque ou plusieurs des revendications précédentes, **caractérisé en ce que** l'un des éléments de palier (18) présente un logement de palier avec une surface tournée vers l'axe de rotation (X) à partir de laquelle au moins une saillie (22) portant une surface de contact (24) s'étend vers l'intérieur, et **en ce que** le deuxième élément de palier (20) présente un disque à partir duquel une saillie (34) présentant une autre surface de contact (36) s'étend vers l'extérieur, ou l'élément est réalisé de telle sorte.

5. Assemblage de palier selon l'une quelconque ou plusieurs des revendications 1 à 3, **caractérisé en ce que** l'un des éléments de palier présente un tuyau cylindrique (14) avec une surface intérieure déterminant l'une des surfaces de contact (21), et **en ce que** le deuxième élément de palier (52) présente un disque avec au moins une saillie (54) présentant une ou la deuxième surface de contact, ou l'élément est réalisé de telle sorte.

6. Assemblage de palier selon l'une quelconque ou plusieurs des revendications précédentes, **caractérisé par** un deuxième palier qui présente un coussinet cylindrique (56), disposé sur l'élément de support (12), avec une zone périphérique, composée de préférence de matière synthétique, qui peut glisser le long d'une des surfaces de contact (21) et qui doit être érodée ou usée radialement dans une certaine mesure pour que les surfaces de contact (21, 54) puissent se toucher.

7. Presse à balles, en particulier presse à balles rondes, avec au moins un assemblage de palier (10) selon l'une quelconque ou plusieurs des revendications précédentes.

8. Presse à balles selon la revendication 7, **caractérisée en ce que** l'assemblage de palier (10) loge et/ou entraîne et/ou coopère avec un tuyau (14) portant au moins une courroie de formation de balles.

9. Presse à balles selon la revendication 8, **caractérisée en ce que** le tuyau (14) est logé au moyen d'au moins deux assemblages de palier (10) sur la presse à balles ou sur les parois latérales de la presse à balles.
